# EUROPEAN PATENT SPECIFICATION

(11) **EP 4 300 669 B1**
(45) Date of publication and mention of the grant of the patent: **08.04.2026**
(21) Application number: 22883894.2
(22) Date of filing: 14.10.2022
(51) Int. Cl.: H01M 10/48, H01M 50/131, H01M 50/124, H01M 50/10, H01M 50/103, H01M 50/105

(54) **SECONDARY BATTERY, MANUFACTURING METHOD THEREOF, AND DEVICE INCLUDING THE SAME**
SEKUNDÄRBATTERIE, HERSTELLUNGSVERFAHREN DAFÜR UND VORRICHTUNG DAMIT
BATTERIE SECONDAIRE, SON PROCÉDÉ DE FABRICATION ET DISPOSITIF LA COMPRENANT

(30) Priority: 18.10.2021 KR 20210138334
(43) Date of publication of application: 03.01.2024
(73) Proprietor: LG Energy Solution, Ltd., Seoul 07335 (KR)
(72) Inventor: CHOI, Jinhyeong, Daejeon 34122 (KR)
(74) Representative: Plasseraud IP
(86) International application number: PCT/KR2022/015629
(87) International publication number: WO 2023/068671

(56) References cited:
- JP-A- 2009 037 961
- JP-A- 2015 056 359
- KR-A- 20110 055 254
- KR-A- 20120 067 734
- KR-A- 20190 051 537
- KR-B1- 101 072 737
- KR-B1- 101 075 343
- US-A1- 2012 156 551

## Description

### [TECHNICAL FIELD]

### Cross Citation with Related Application(s)

This application claims the benefit of Korean Patent Application No. 10-2021-0138334 filed on October 18, 2021 with the Korean Intellectual Property Office.

The present disclosure relates to a secondary battery and a device including the same, and more particularly to a secondary battery capable of easily confirming an expansion of the secondary battery, and a device including the same

### [BACKGROUND]

Recently, the demand for portable electronic products such as notebooks, video cameras, cellular phones or the like has rapidly increased, and electric vehicles, energy storage batteries, robots, satellites or the like have been actively developed. Thereby, many studies have been conducted on the secondary battery used as its driving power source.

Depending on the shape of the battery case, a secondary battery is classified into a cylindrical battery where an electrode assembly is built into a cylindrical metal can, a prismatic battery where an electrode assembly is built into a prismatic metal can, and a pouch-type battery where an electrode assembly is built into a pouch type case formed of an aluminum laminate sheet.

The electrode assembly built into the battery case is an electricity-generating device enabling charge and discharge that has a positive electrode/separator/negative electrode laminate structure, and is classified into a jelly-roll type, a stack type, and a stack/folding type. The jelly-roll type is a shape in which a positive electrode and a negative electrode, each made of an active material-coated long sheet, is rolled with a separator interposed between them, the stack type is a shape in which a plurality of positive electrodes and a plurality of negative electrodes each having a predetermined size are laminated in this order in a state where a separator is interposed therebetween, and a stack/folding type is a combination of a jelly-roll type and a stack type. Of these, the jelly-roll-type electrode assembly has advantages that manufacture is easy and the energy density per weight is high.

Meanwhile, the secondary battery includes, for example, a nickel cadmium battery, a nickel hydrogen battery, a nickel zinc battery, a lithium secondary battery, and the like. Among them, the lithium secondary batteries are widely used in the field of high-tech electronic devices because they have advantages, for example, hardly exhibiting memory effects in comparison with nickel-based secondary batteries and thus being freely charged and discharged, and having very low self-discharge rate, high operating voltage and high energy density per unit weight.

Moreover, as the electrolyte is decomposed or side reactions occur in the secondary battery during the cycle, a swelling phenomenon due to gas generation may occur. As the cycle progresses, the degree of gas generation can be grasped, and the degradation of the corresponding secondary battery, and the like can be grasped.

Conventional secondary batteries are disclosed in documents JP 2009 037961 A, US2012/156551 A1 and JP 2015 056359 A.

However, in conventional secondary batteries, there is known no method for clearly grasping the swelling phenomenon with the naked eye.

Therefore, because it is necessary to clearly confirm the presence or absence of the swelling phenomenon with the naked eye and to confirm the degree of expansion, there is a need for a new structure that can solve the above problems.

### [DETAILED DESCRIPTION OF THE INVENTION]

### [Technical Problem]

It is an object of the present disclosure to provide a secondary battery capable of confirming easily an expansion of the secondary battery, and a device including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a secondary battery comprising: an electrode assembly; a first battery case that houses the electrode assembly; and a second battery case that houses the first battery, wherein the second battery case is formed to have a different color from that of the first battery case.

A groove is formed in the second battery case so that a portion of the second battery case exists between the groove and the first battery case. The groove being configured such that, during expansion of the secondary battery, said portion of the second battery case is ruptured and removed, the groove is connected to the first battery case and the first battery case is exposed to the outside.

A plurality of grooves may be formed on the second battery case.

The plurality of grooves may be formed to be spaced apart from each other on the second battery case.

The first battery case and the second battery case may be formed to have different materials from each other.

The first battery case may be formed to have greater deformability than the second battery case.

According to another embodiment of the present disclosure, there is provided a method of manufacturing a secondary battery, comprising the steps of: housing an electrode assembly in a first battery case; and covering the first battery case in which the electrode assembly is housed with a second battery case, wherein the second battery case is formed to have a color different from that of the first battery case.

A groove is formed in the second battery case so that a portion of the second battery case exists between the groove and the first battery case and such that, during expansion of the secondary battery, said portion of the second battery case in which the groove is formed is ruptured, and removed, the groove is connected to the first battery case and the first battery case is exposed to the outside.

According to yet another embodiment of the present disclosure, there is provided a device comprising the above-mentioned secondary battery.

### [Advantageous Effects]

According to embodiments of the present disclosure, the first battery case and the second battery case are formed in different colors, and a groove is formed on the second battery case, thereby capable of confirming expansion of the secondary battery with the naked eye.

In addition, the degree of expansion can be confirmed through the change in the size of the groove formed as the second case is torn.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a pouch-type battery among secondary batteries according to an embodiment of the present disclosure;
Fig. 2 is a perspective view showing a cylindrical battery among secondary batteries according to an embodiment of the present disclosure;
Fig. 3 is a perspective view showing a prismatic battery among secondary batteries according to an embodiment of the present disclosure;
Fig. 4 is a partially exploded perspective view of a pouch-type battery according to an embodiment of the present disclosure;
Fig. 5 is a diagram showing a secondary battery according to an embodiment of the present disclosure, which combines the components of Fig. 4 and includes a second battery case;
Fig. 6 is a diagram showing a cross section cut along the line A-A' of Fig. 5;
Fig. 7 is an enlarged view of a section C of Fig. 6;
Fig. 8 is a diagram showing when the secondary battery of Fig. 6 expands;
Fig. 9 is an enlarged view of a section D of Fig. 8; and
Fig. 10 is an enlarged view of a section B of Fig. 5, which shows states in which first and second battery cases change due to expansion of a secondary battery.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein, the scope of protection is defined by the appended claims.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

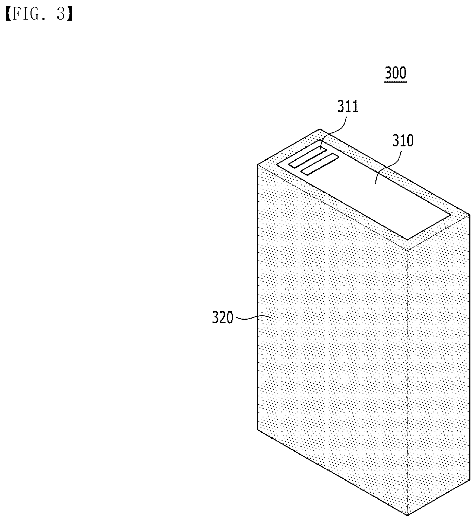

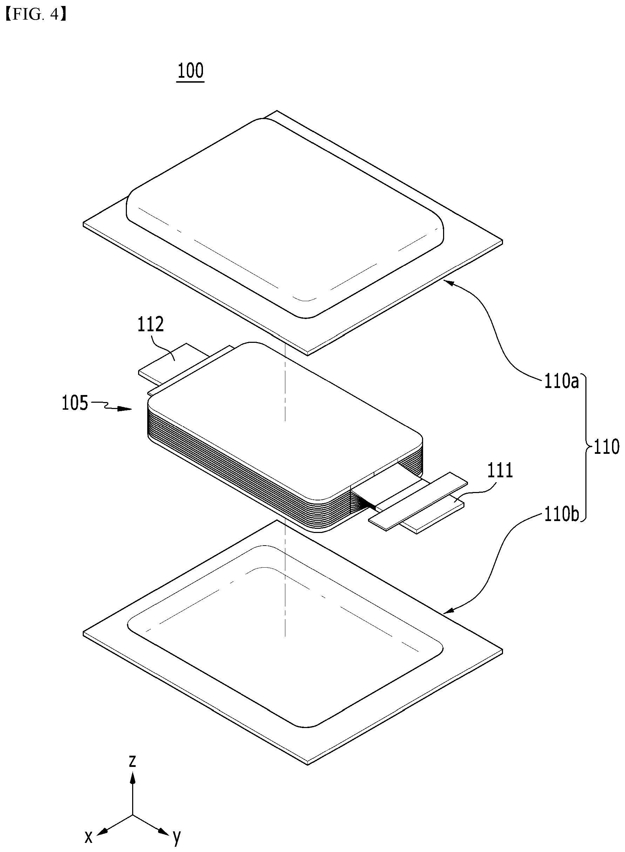

Fig. 3 is a side view showing a side surface of a magnetic filter according to an embodiment of the present disclosure. Fig. 4 is a cross-sectional view taken along the line A-A' of Fig. 3.

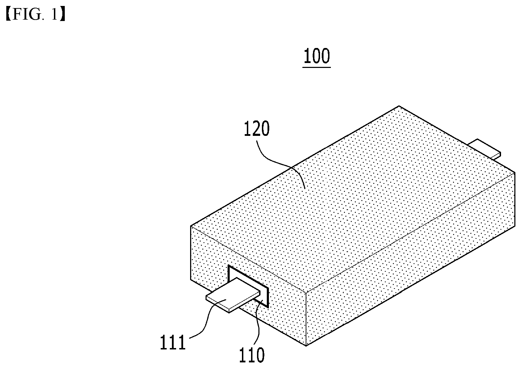

Now, a secondary battery according to an embodiment of the present disclosure will be described with reference to Figs. 1 to 4.

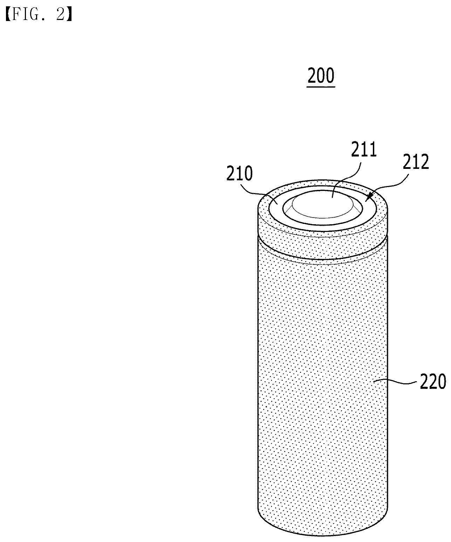

Fig. 1 is a perspective view showing a pouch-type battery among secondary batteries according to an embodiment of the present disclosure. Fig. 2 is a perspective view showing a cylindrical battery among secondary batteries according to an embodiment of the present disclosure. Fig. 3 is a perspective view showing a prismatic battery among secondary batteries according to an embodiment of the present disclosure. Fig. 4 is a partially exploded perspective view of a pouch-type battery according to an embodiment of the present disclosure.

Referring to Figs. 1 and 4, the secondary battery 100 according to the present embodiment is a pouch-type secondary battery, and can be manufactured by housing the electrode assembly 105 inside the first battery case 110 and then sealing the case.

The electrode assembly 105 may include a positive electrode, a negative electrode, and a separator disposed between the positive electrode and the negative electrode.

Each of the positive electrode and the negative electrode includes a positive electrode tab and a negative electrode tab, and a positive lead 111 connected to the positive tabs and a negative lead 112 connected to the negative tabs may be exposed to the outside of the first battery case 110. At this time, the positive lead 111 and the negative lead 112 may function as electrode terminals. The positive lead 111 and the negative lead 112 may be collectively referred to as electrode leads 111 and 112.

The first battery case 110 is made of a laminate sheet, and may include a resin layer for heat sealing and a metal layer for preventing material penetration.

The first battery case 110 may include an upper case 110a and a lower case 110b. Each of the upper case 110a and the lower case 110b may be formed with separate housing parts in which the electrode assembly 20 can be seated.

Meanwhile, the pouch-type battery 100 shows a bidirectional battery in which the positive electrode lead 111 and the negative electrode lead 112 protrude in mutually opposite directions, but the pouch-type battery 100 of the present disclosure is not limited to such a form, and includes a unidirectional battery in which the positive electrode lead 111 and the negative electrode lead 112 protrude in the same direction, and a step-type battery having a stepped part is formed in an electrode assembly housing part. In particular, referring to Fig. 4, a step-type battery having a step in the electrode assembly housing part can be confirmed.

Referring to Fig. 2, the cylindrical battery 200 includes a first cylindrical battery case 210 made of a metal material, and includes a second cylindrical battery case 220 covering the first cylindrical battery case 210.

In the cylindrical battery 200, a top cap protruding upward may function as a positive electrode terminal 211, and a crimping part 212 may function as a negative electrode terminal. Therefore, the second battery case 220 may cover the entire top cap functioning as an electrode terminal and the remaining portion except a portion of the crimping part 212.

Referring to Fig. 3, the prismatic battery 300 includes a prismatic first battery case 310 made of a metal material, and includes a prismatic second battery case 320 covering the prismatic first battery case 310.

The prismatic battery 300 is arranged so that the electrode terminal 311 is exposed on the upper surface. Thus, the prismatic second battery case 320 may be formed on the remaining upper surface except the portion where the electrode terminals 311 are exposed on the upper surface, . the entire side surface of the prismatic first battery case 310, and the entire lower surface of the prismatic first battery case 310. That is, the prismatic second battery case 320 may cover the remaining prismatic first battery case 310 except the electrode terminal 311.

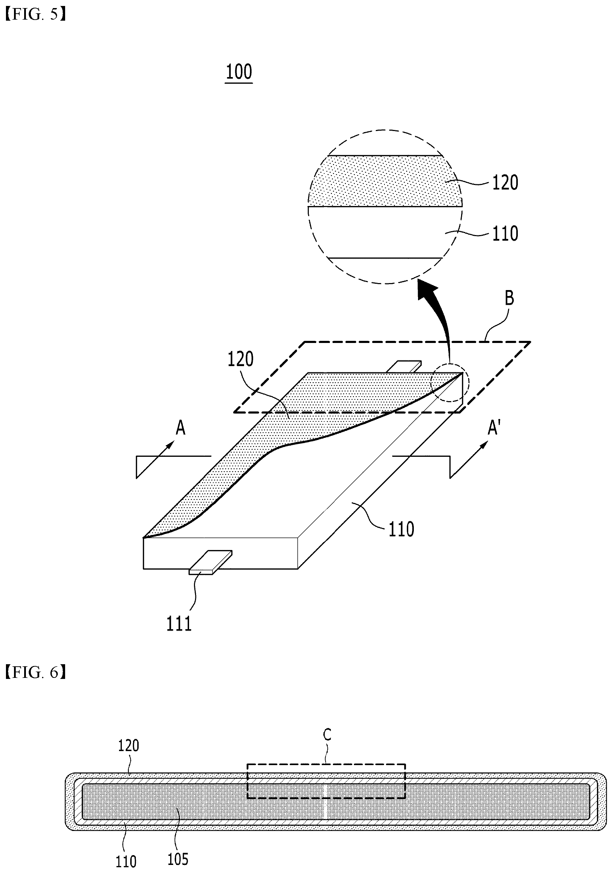

Next, a second battery case formed in a secondary battery according to an embodiment of the present disclosure will be described in detail with reference to Figs. 5 to 10. The pouch-type battery is mainly described, but a shape in which the pouch-type battery is changed to the cylindrical battery and the prismatic battery shown in Figs. 2 and 3 is also included in the scope of the present disclosure.

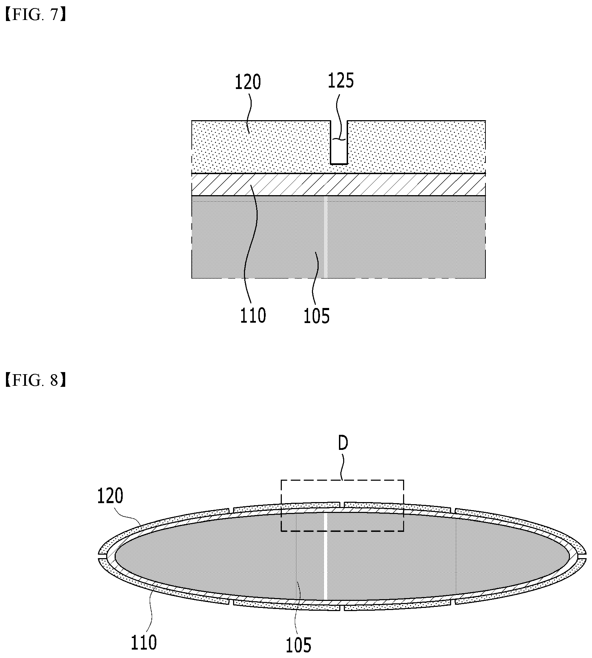

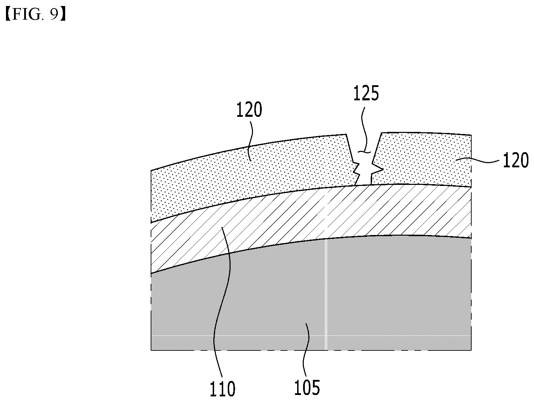

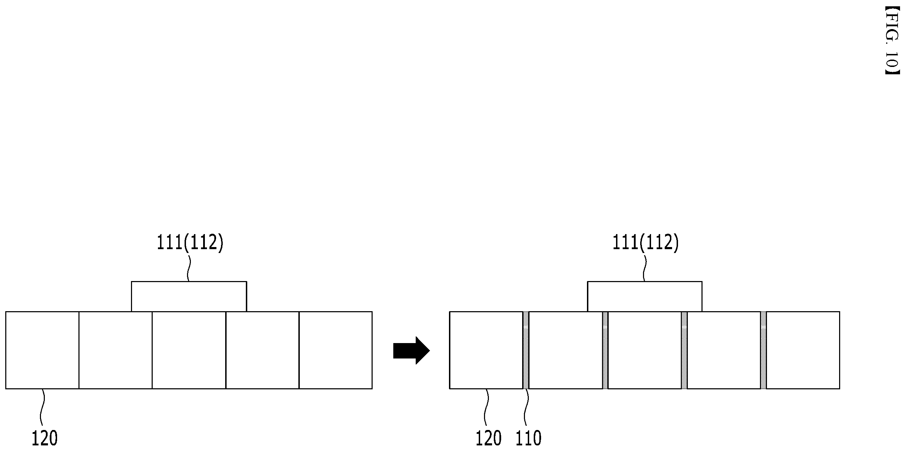

Fig. 5 is a diagram showing a secondary battery according to an embodiment of the present disclosure, which combines the components of Fig. 4 and includes a second battery case. Fig. 6 is a diagram showing a cross section cut along the line A-A' of Fig. 5. Fig. 7 is an enlarged view of a section C of Fig. 6. Fig. 8 is a diagram showing when the secondary battery of Fig. 6 expands. Fig. 9 is an enlarged view of a section D of Fig. 8. Fig. 10 is an enlarged view of a section B of Fig. 5, which shows states in which first and second battery cases change due to expansion of a secondary battery.

Referring to Figs.5 and 6, the secondary battery 100 according to the present embodiment includes an electrode assembly 105, a first battery case 110 for housing the electrode assembly 105. and a second battery case 120 for covering the first battery case 110. At this time, the second battery case 120 is formed to have a color different from that of the first battery case 110.

Specifically, the first battery case 110 and the second battery case 120 may be formed by a combination of various colors, complementary colors can be used for high visibility, or black, yellow, red, etc. can be selected. Therefore, as will be described later, when the second battery case 120 ruptures due to the expansion of the secondary battery 100, and the color of the first battery case 110 is exposed to the outside, it can be easily distinguished with the naked eye. Further, the expansion degree of the secondary battery 100 can be predicted according to the exposure degree of the color of the first battery case 110.

Meanwhile, referring to Fig. 7, a groove 125 may be formed in the second battery case 120. A plurality of grooves 125 may be formed on the second battery case 120, and each of the grooves 125 may be formed to be spaced apart from each other on the second battery case 120.

At this time, referring to Fig. 5, a space between the electrode leads 111 and 112 of the secondary battery 100 may be defined as the longitudinal direction of the secondary battery 100. Therefore, the groove 125 may be formed along the longitudinal direction of the secondary battery 100 on the second battery case 120 of the secondary battery 100. In addition, the grooves 125 may be formed to be spaced apart from each other along the width direction of the secondary battery 100, which is a direction perpendicular to the length direction.

In addition, when forming the groove 125, the groove 125 is formed on the second battery case 120 so that a portion of the second battery case 120 exists between the groove 125 and the first battery case 110. Therefore, the first battery case 110 is formed not to be exposed by the groove 125.

As the electrolyte inside the secondary battery 100 is decomposed or a side reaction occurs, gas is generated and the secondary battery 100 expands, causing a swelling phenomenon, the second battery case 120 may be ruptured. Specifically, the groove 125 is formed on the second battery case 120, and the portion of the second battery case 120 in which the groove 125 is formed may be formed to have a thinner thickness than other portions. Therefore, when swelling of the secondary battery 100 occurs, the portion of the second battery case 120 in which the groove 125 is formed may be ruptured by the expansion force caused by the swelling phenomenon.

At this time, referring to Figs. 8 and 9, as the second battery case 120 ruptures, a portion of the second battery case 120 between the groove 125 and the first battery case 110 is removed removed. At this time, "removed" means that as the second battery case 120 ruptures, a portion of the second battery case 120 formed between the groove 125 and the first battery case 110 does not remain. Therefore, as the portion of the second battery case 120 located between the groove 125 and the first battery case 110 is removed, the groove 125 is connected to the first battery case 110.

Further, as the groove 125 and the first battery case 110 are connected as described above, the first battery case 110 is exposed to the outside. Therefore, as the first battery case 110 having a different color from the second battery case 120 is exposed to the outside, whether or not swelling phenomenon of the secondary battery 100 has occurred can be grasped with the naked eye. Further, the area of the first battery case 110 exposed by the groove 125 varies according to the degree of swelling, so that the degree of swelling and expansion of the battery can be predicted depending on the area.

Meanwhile, the first battery case 110 and the second battery case 120 may be formed to have different materials. Specifically, the second battery case 120 has less deformability against the expansion force compared to the first battery case 110, and thus, can be formed to rupture without copying to the expansion of the secondary battery 100. However, even if the second battery case 120 ruptures, the performance of the secondary battery 100 can be maintained because the first battery case 110 remains intact.

Therefore, the first battery case 110 may be formed to have greater deformability than the second battery case 120. Further, the material may be selected to have the above deformability.

Referring to Fig. 10, as described above, when swelling and expansion of the secondary battery 100 occur, the first battery case 110 may be exposed between the second battery cases 120. At this time, due to the characteristics of the cell swelling phenomenon, the first battery case 110 may start to be exposed from the center of the secondary battery 100. Further, when the overall swelling of the secondary battery 100 occurs, the first battery case 110 may be exposed at a plurality of positions through the plurality of grooves 125 formed on the second battery case 120 as shown in Fig. 10. In accordance with the exposure position and degree of exposure of the first battery case 110, the position and degree of swelling of the secondary battery 100 can be confirmed with the naked eye, and the degree of occurrence of the swelling phenomenon and the deterioration in performance of the secondary battery can be predicted through the area where the first battery case 110 is exposed.

Next, a method of manufacturing a secondary battery according to another embodiment of the present disclosure will be described. Since the description of the secondary battery described above can also be applied to the present embodiment, redundant descriptions will be omitted.

The manufacturing method of the secondary battery according to the present embodiment includes a step of housing an electrode assembly 105 in a first battery case 110; and a step of covering the first battery case 110 in which the electrode assembly 105 is housed with the second battery case 120. At this time, the second battery case 120 is formed to have a color different from that of the first battery case 110.

Further, a groove 125 is formed in the second battery case 120. As described above, when swelling and expansion occur in the secondary battery 100, the second battery case 120 is ruptured, and as the first battery case 110 is exposed, it can be grasped with the naked eye.

In particular, the groove 125 formed on the second battery case 120 is formed along the longitudinal direction of the secondary battery 100, and when a swelling phenomenon occurs, the secondary battery 100 may be deformed by expansion.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The above-mentioned secondary battery according to the present embodiment can be applied to various devices. Such a device can be applied to a vehicle means such as an electric bicycle, an electric vehicle, or a hybrid vehicle, but the present disclosure is not limited thereto, and is applicable to various devices that can use a secondary battery.

Although preferred embodiments of the present disclosure have been described in detail above, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

100: secondary battery
105: electrode assembly
110: first battery case
120: second battery case
125: groove

## Claims

1. A secondary battery (100, 200, 300) comprising:
an electrode assembly (105);
a first battery case (110, 210, 310) that houses the electrode assembly (105); and a second battery case (120, 220, 320) that houses the first battery case (110, 210, 310),
wherein the second battery case (120, 220, 320) is formed to have a different color from that of the first battery case (110, 210, 310),
the secondary battery (100, 200, 300) is **characterised in that** a groove (125) is formed in the second battery case (120, 220, 320) so that a portion of the second battery case (120) exists between the groove (125) and the first battery case (110), the groove (125) being configured such that, during expansion of the secondary battery (100, 200, 300), said portion of the second battery case (120, 220, 320) is ruptured and removed, the groove (125) is connected to the first battery case (110) and the first battery case (110) is exposed to the outside.

2. The secondary battery (100, 200, 300) according to claim 1, wherein:
the groove (125) is formed in a plurality of grooves (125) on the second battery case (120, 220, 320).

3. The secondary battery (100, 200, 300) according to claim 2, wherein:
the plurality of grooves (125) are formed to be spaced apart from each other on the second battery case (120, 220, 320).

4. The secondary battery (100, 200, 300) according to claim 1, wherein:
the first battery case (110, 210, 310) and the second battery case (120, 220, 320) are formed to have different materials from each other.

5. The secondary battery (100, 200, 300) according to claim 4, wherein:
the first battery case (110, 210, 310) is formed to have greater deformability than the second battery case (120, 220, 320).

6. A method of manufacturing a secondary battery (100, 200, 300), comprising the steps of:
housing an electrode assembly (105) in a first battery case (110, 210, 310); and
covering the first battery case (110, 210, 310) in which the electrode assembly (105) is housed with a second battery case (120, 220, 320),
wherein:
the second battery case (120, 220, 320) is formed to have a color different from that of the first battery case (110, 210, 310),
the method **characterized in that**:
a groove (125) is formed in the second battery case (120, 220, 320) so that a portion of the second battery case (120) exists between the groove (125) and the first battery case (110) and such that, during expansion of the secondary battery (100, 200, 300), said portion of the second battery case (120, 220, 320) is ruptured and removed, the groove (125) is connected to the first battery case (110) and the first battery case (110) is exposed to the outside.

7. A device comprising the secondary battery (100, 200, 300) as set forth in claim 1.

## Patentansprüche

1. Sekundärbatterie (100, 200, 300), umfassend:
eine Elektrodenanordnung (105);
ein erstes Batteriegehäuse (110, 210, 310), welches die Elektrodenanordnung (105) aufnimmt; und ein zweites Batteriegehäuse (120, 220, 320), welches das erste Batteriegehäuse (110, 210, 310) aufnimmt,
wobei das zweite Batteriegehäuse (120, 220, 320) derart gebildet ist, dass es eine Farbe aufweist, welche von der des ersten Batteriegehäuses (110, 210, 310) verschieden ist,
wobei die Sekundärbatterie (100, 200, 300) **dadurch gekennzeichnet ist, dass** eine Nut (125) in dem zweiten Batteriegehäuse (120, 220, 320) gebildet ist, so dass zwischen der Nut (125) und dem ersten Batteriegehäuse (110) ein Abschnitt des zweiten Batteriegehäuses (120) vorhanden ist, wobei die Nut (125) derart eingerichtet ist, dass, während einer Ausdehnung der Sekundärbatterie (100, 200, 300), der Abschnitt des zweiten Batteriegehäuses (120, 220, 320) gebrochen und entfernt wird, wobei die Nut (125) mit dem ersten Batteriegehäuse (110) verbunden wird und das erste Batteriegehäuse (110) zu dem Äußeren freigelegt wird.

2. Sekundärbatterie (100, 200, 300) nach Anspruch 1, wobei:
die Nut (125) in einer Mehrzahl von Nuten (125) an dem zweiten Batteriegehäuse (120, 220, 320) gebildet ist.

3. Sekundärbatterie (100, 200, 300) nach Anspruch 2, wobei:
an dem zweiten Batteriegehäuse (120, 220, 320) eine Mehrzahl von Nuten (125) derart gebildet ist, dass diese voneinander beabstandet sind.

4. Sekundärbatterie (100, 200, 300) nach Anspruch 1, wobei:
das erste Batteriegehäuse (110, 210, 310) und das zweite Batteriegehäuse (120, 220, 320) derart gebildet sind, dass sie voneinander verschiedene Materialien aufweisen.

5. Sekundärbatterie (100, 200, 300) nach Anspruch 4, wobei:
das erste Batteriegehäuse (110, 210, 310) derart gebildet ist, dass es eine größere Verformbarkeit aufweist als das zweite Batteriegehäuse (120, 220, 320).

6. Verfahren zur Herstellung einer Sekundärbatterie (100, 200, 300), umfassend die folgenden Schritte:
Aufnehmen einer Elektrodenanordnung (105) in einem ersten Batteriegehäuse (110, 210, 310); und
Abdecken des ersten Batteriegehäuses (110, 210, 310), in welchem die Elektrodenanordnung (105) aufgenommen ist, mit einem zweiten Batteriegehäuse (120, 220, 320),
wobei:
das zweite Batteriegehäuse (120, 220, 320) derart gebildet ist, dass es eine Farbe aufweist, welche von der des ersten Batteriegehäuses (110, 210, 310) verschieden ist,
wobei das Verfahren **dadurch gekennzeichnet ist, dass**:
eine Nut (125) in dem zweiten Batteriegehäuse (120, 220, 320) gebildet ist, so dass zwischen der Nut (125) und dem ersten Batteriegehäuse (110) ein Abschnitt des zweiten Batteriegehäuses (120) vorhanden ist und so dass, während einer Ausdehnung der Sekundärbatterie (100, 200, 300), der Abschnitt des zweiten Batteriegehäuses (120, 220, 320) gebrochen und entfernt wird, wobei die Nut (125) mit dem ersten Batteriegehäuse (110) verbunden wird und das erste Batteriegehäuse (110) zu dem Äußeren freigelegt wird.

7. Vorrichtung, umfassend die Sekundärbatterie (100, 200, 300) nach Anspruch 1.

## Revendications

1. Batterie secondaire (100, 200, 300) comprenant :
un ensemble d'électrodes (105) ;
un premier boîtier de batterie (110, 210, 310) qui loge l'ensemble d'électrodes (105) ;
et un second boîtier de batterie (120, 220, 320) qui loge le premier boîtier de batterie (110, 210, 310),
dans laquelle le second boîtier de batterie (120, 220, 320) est formé pour présenter une couleur différente de celle du premier boîtier de batterie (110, 210, 310),
la batterie secondaire (100, 200, 300) est **caractérisée en ce qu'**une rainure (125) est formée dans le second boîtier de batterie (120, 220, 320) de sorte qu'une partie du second boîtier de batterie (120) existe entre la rainure (125) et le premier boîtier de batterie (110), la rainure (125) étant configurée de sorte que, pendant l'expansion de la batterie secondaire (100, 200, 300), ladite partie du second boîtier de batterie (120, 220, 320) est cassée et retirée, la rainure (125) est connectée au premier boîtier de batterie (110) et le premier boîtier de batterie (110) est exposé à l'extérieur.

2. Batterie secondaire (100, 200, 300) selon la revendication 1, dans laquelle :
la rainure (125) est formée dans une pluralité de rainures (125) sur le second boîtier de batterie (120, 220, 320).

3. Batterie secondaire (100, 200, 300) selon la revendication 2, dans laquelle :
la pluralité de rainures (125) sont formées pour être espacées les unes des autres sur le second boîtier de batterie (120, 220, 320).

4. Batterie secondaire (100, 200, 300) selon la revendication 1, dans laquelle :
le premier boîtier de batterie (110, 210, 310) et le second boîtier de batterie (120, 220, 320) sont formés pour avoir, l'un par rapport à l'autre, des matériaux différents.

5. Batterie secondaire (100, 200, 300) selon la revendication 4, dans laquelle :
le premier boîtier de batterie (110, 210, 310) est formé pour présenter une déformabilité plus grande que celle du second boîtier de batterie (120, 220, 320).

6. Procédé de fabrication d'une batterie secondaire (100, 200, 300), comprenant les étapes consistant à :
loger un ensemble d'électrodes (105) dans un premier boîtier de batterie (110, 210, 310) ; et
recouvrir le premier boîtier de batterie (110, 210, 310) dans lequel l'ensemble d'électrodes (105) est logé avec un second boîtier de batterie (120, 220, 320),
dans lequel :
le second boîtier de batterie (120, 220, 320) est formé pour présenter une couleur différente de celle du premier boîtier de batterie (110, 210, 310),
le procédé étant **caractérisé en ce que** :
une rainure (125) est formée dans le second boîtier de batterie (120, 220, 320) de sorte qu'une partie du second boîtier de batterie (120) existe entre la rainure (125) et le premier boîtier de batterie (110) et de sorte que, pendant l'expansion de la batterie secondaire (100, 200, 300), ladite partie du second boîtier de batterie (120, 220, 320) est cassée et retirée, la rainure (125) est connectée au premier boîtier de batterie (110) et le premier boîtier de batterie (110) est exposé à l'extérieur.

7. Dispositif comprenant la batterie secondaire (100, 200, 300) selon la revendication 1.
